# EUROPÄISCHE PATENTSCHRIFT

(11) **EP 1 531 306 B1**
(45) Veröffentlichungstag und Bekanntmachung des Hinweises auf die Patenterteilung: **13.02.2008**
(21) Anmeldenummer: 03025900.6
(22) Anmeldetag: 12.11.2003
(51) Int. Cl.: F24D 3/14

(54) **Rohraufnahmeplatte aus Kunststoff für eine Aufnahme von fluiddurchströmten Rohren**
Tube mounting plate made of plastic for receiving tubes in which a fluid flues
Plaque en plastique pour le montage de tubes dans lesquels circule un fluide

(43) Veröffentlichungstag der Anmeldung: 18.05.2005
(73) Patentinhaber: Roth Werke GmbH, 35232 Dautphetal (DE)
(72) Erfinder:
(74) Vertreter: Rohmann, Michael

(56) Entgegenhaltungen:
- EP-A- 0 448 928
- EP-A- 0 514 684
- AT-B- 362 913
- DE-U- 8 703 788
- DE-U- 9 109 512
- US-A- 4 250 674
- US-A- 5 042 569
- US-B1- 6 539 681

## Beschreibung

Die Erfindung betrifft eine Rohraufnahmeplatte aus Kunststoff für eine Aufnahme von fluiddurchströmten Rohren, insbesondere von Heizungsrohren, wobei die Platte angeformte Rohraufnahmeelemente aufweist. Die Erfindung betrifft fernerhin ein Aggregat aus einer Rohraufnahmeplatte und einem Befestigungselement. Die erfindungsgemäße Rohraufnahmeplatte ist insbesondere für die Aufnahme bzw. für das Verlegen von Heizungsrohren für Fußbodenheizungen vorgesehen. In der Rohraufnahmeplatte können aber beispielsweise auch Rohre eines Kühlsystems verlegt werden.

Eine Rohraufnahmeplatte aus Kunststoff für Heizungsrohre wird in der Regel auf einer Dämmschicht bzw. auf einer Dämmplatte zur Wärme- und/oder Trittschalldämmung verlegt. Die Rohraufnahmeelemente sind als Noppen ausgebildet, wobei diese Noppen für eine klemmende Halterung der Heizungsrohre eingerichtet sind. Normalerweise sind die Noppen als Näpfe ausgebildet, die nach unten - das heißt zur Dämmplatte hin - offen sind und somit auf der Dämmplatte Hohlräume bilden. Wenn die Heizungsrohre auf der Rohraufnahmeplatte bzw. in der Rohraufnahmeplatte verlegt sind, wird in der Regel in einem letzten Arbeitsschritt eine Estrichschicht oder dgl. aufgebracht.

Die aus der Praxis bekannten Rohraufnahmeplatten der vorstehend beschriebenen Art haben sich grundsätzlich bewährt. Allerdings lässt die Präzision und Funktionssicherheit beim Verlegen und Fixieren der Platten manchmal zu wünschen übrig. So ist es häufig schwierig, die idealen Stellen zum Einbringen von Fixierungselementen bei der Befestigung der Platten auf einem Untergrund zu finden. Außerdem kommt es hin und wieder vor, dass die Platten verlegt werden, obwohl an manchen Stellen die unterseitige Dämmschicht noch nicht vollflächig ausgeführt ist.

Eine Rohraufnahmeplatte der eingangs genannten Art, von der die Erfindung ausgeht, ist aus US 6,539,681 B1 bekannt. Diese Rohraufnahmeplatte ist als Distanzplatte für einen Hohlraumboden vorgesehen. Sie ist zur Auflage auf einem Unterboden bestimmt und weist Distanzelemente sowie Halterungselemente zur Halterung von Rohren für ein Heiz- oder Kühlmedium auf. Die Distanzplatte kann insbesondere aus einer Kunststofffolie oder aus einem Metallblech durch Tiefziehen hergestellt werden. Die Platte weist Höcker auf, die in Form eines Kegelstumpfes ausgebildet sind und die Distanzelemente bilden. Außerdem sind zur selben Seite wie die Höcker hin Rinnen in der Platte vorgesehen, die der Halterung der Rohre dienen. Auch diese bekannte Rohraufnahmeplatte weist die vorstehend beschriebenen Nachteile auf.

Aus AT 362 913 B ist eine Rohraufnahmeplatte bekannt, die zu einer Einrichtung zur Wärmeisolation und gleichzeitiger Wärmeenergiegewinnung bei einem Gebäude gehört. Diese Rohraufnahmeplatte wird auf einer Schicht aus wärmeisolierendem Material befestigt und weist an ihrer Oberseite Noppen zur Aufnahme von Rohren auf. Durch die Rohre wird ein Medium, dass Wärme speichern kann, insbesondere Wasser durchgeführt. Diese bekannte Rohraufnahmeplatte weist ebenfalls die oben beschriebenen Nachteile auf.

Demgegenüber liegt der Erfindung das technische Problem zugrunde, eine Rohraufnahmeplatte der eingangs genannten Art anzugeben, bei der die vorstehend beschriebenen Nachteile vermieden werden können und die sich funktionssicher und präzise auf einfache Weise verlegen und fixieren lässt.

Zur Lösung dieses technischen Problems lehrt die Erfindung eine Rohraufnahmeplatte der eingangs beschriebenen Art, die dadurch gekennzeichnet ist, dass sie zumindest bereichsweise transparent ausgebildet ist. Transparent meint im Rahmen der Erfindung insbesondere, dass eine Person mit durchschnittlicher Sehfähigkeit mit bloßem Auge durch die erfindungsgemäße Rohraufnahmeplatte hindurchsehen kann und den Untergrund unter der Platte bzw. den Hintergrund hinter der Platte erkennen kann. Es liegt im Rahmen der Erfindung, dass zumindest 50 %, vorzugsweise zumindest 75 % und sehr bevorzugt zumindest 90 % der Fläche der Rohraufnahmeplatte transparent ausgebildet ist. Nach besonders bevorzugter Ausführungsform der Erfindung ist die gesamte Rohraufnahmeplatte bzw. die gesamte Fläche der Rohraufnahmeplatte transparent ausgebildet.

Die erfindungsgemäße Rohraufnahmeplatte ist für die Verlegung der fluiddurchströmten Rohre auf dem Boden bzw. Fußboden oder an einer Wand oder an einer Decke eines Raumes geeignet. Die Rohraufnahmeplatte wird in der Regel auf einem festen Untergrund, beispielsweise auf Estrich, Beton oder auf einem Holzfussboden verlegt. Es ist aber auch möglich, die Rohraufnahmeplatte auf einer Dämmschicht bzw. Dämmplatte zur Wärme- und/oder Trittschalldämmung zu verlegen. Es versteht sich, dass die angeformten Rohraufnahmeelemente aus dem gleichen Kunststoff wie die übrige Platte bestehen.

Es liegt im Rahmen der Erfindung, dass die Rohraufnahmeelemente für eine klemmende Halterung der Rohre eingerichtet sind. Nach sehr bevorzugter Ausführungsform, der im Rahmen der Erfindung ganz besondere Bedeutung zukommt, sind die Rohraufnahmeelemente als Noppen ausgebildet und zwischen den Noppen sind Kanäle für die Aufnahme der Rohre vorgesehen. Es liegt dabei im Rahmen der Erfindung, dass die Noppen innen hohl ausgebildet sind, dass heißt die Noppen sind als Näpfe ausgebildet, die nach unten offen sind und auf dem unter der Platte befindlichen Untergrund Hohlräume bilden.

Eine sehr bevorzugte Ausführungsform, der im Rahmen der Erfindung ganz besondere Bedeutung zukommt, ist dadurch gekennzeichnet, dass eine Mehrzahl von die Platte durchsetzenden Öffnungen vorgesehen ist. In der Plattenoberfläche sind also Öffnungen angeordnet, die einen Zugang zu dem unter der Platte befindlichen Untergrund, beispielsweise zu einer Dämmschicht ermöglichen. Die Öffnungen haben beispielsweise einen kreisförmigen Querschnitt. Diese Öffnungen bedingen den wesentlichen Vorteil, dass beim Aufbringen einer Ausgleichsmasse bzw. Füll- oder Vergussmasse, wie beispielsweise beim Aufbringen von Estrich, aufgrund der Öffnungen in der Platte ein direkter Verbund zum Untergrund, beispielsweise zum Estrich oder zum Beton hergestellt werden kann.

Nach sehr bevorzugter Ausführungsform der Erfindung ist zumindest ein Teil der Öffnungen in den Noppenflächen, vorzugsweise in den Noppenoberseiten, vorgesehen. Noppenflächen meint hier die Seitenwände und die Oberseite der Noppen. Zweckmäßigerweise ist in jeder Noppe lediglich eine Öffnung vorgesehen.

Eine Ausführungsform der Erfindung ist dadurch gekennzeichnet, dass zumindest ein Teil der Öffnungen zentralmittig in den Noppenoberseiten angeordnet ist. Es liegt dabei im Rahmen der Erfindung, dass die Öffnungen, die in den Noppenflächen der Platte vorgesehen sind, ausschließlich zentralmittig in den Noppenoberseiten angeordnet sind. Vorzugsweise ist lediglich jeweils eine Öffnung zentralmittig in einer Noppenoberseite vorhanden. Diese Ausführungsform der erfindungsgemäßen Platte eignet sind insbesondere für eine Verlegung der Platte auf einem Boden bzw. Fußboden oder an einer Decke eines Raumes. Die zentralmittig in den Noppenoberseiten angeordneten Öffnungen gewährleisten, dass eine abschließend auf die Platte aufgebrachte Masse (Ausgleichsmasse bzw. Füll- oder Vergussmasse, Estrich, Putz u. dgl.) sich gleichmäßig unterhalb der Noppen bzw. in dem Hohlraum der Noppen verteilen kann.

Nach einer anderen Ausführungsform der Erfindung ist zumindest ein Teil der in den Noppenoberseiten vorgesehenen Öffnungen exzentrisch bezüglich der Oberseitenmitte angeordnet. Zweckmäßigerweise sind bei dieser Ausführungsform alle in den Noppenoberseiten vorgesehenen Öffnungen exzentrisch bezüglich der Oberseitenmitten orientiert. Die Öffnungen sind also gleichsam von der Oberseitenmitte weg zu den Seitenwänden versetzt angeordnet. Es liegt auch bei dieser Ausführungsform im Rahmen der Erfindung, dass bei den mit Noppen versehenen Öffnungen jeweils nur eine exzentrisch angeordnete Öffnung in der Noppenoberseite vorgesehen ist. Die vorgenannte Rohraufnahmeplatte eignet sich insbesondere für eine Verlegung der fluiddurchströmten Rohre an Wänden. Es liegt dabei im Rahmen der Erfindung, dass die exzentrisch angeordneten Öffnungen einer Platte allesamt in die gleiche Richtung exzentrisch ausgerichtet sind. Die Platte kann dann an der Wand so ausgerichtet werden, dass alle Öffnungen gleichsam nach oben zur Decke hin orientiert sind. Dann bilden die Noppen mit diesen Öffnungen gleichsam Taschen, die auf einfache Weise vollständig mit einer nachträglich aufgebrachten Masse verfüllt werden können.

Nach sehr bevorzugter Ausführungsform der Erfindung besteht die erfindungsgemäße Platte aus einem thermoplastischen Polyester. Es liegt dabei im Rahmen der Erfindung, dass die Platte aus Polyethylenterephthalat (PETP) besteht.

Die Erfindung betrifft fernerhin ein Aggregat aus einer Rohraufnahmeplatte und einem Befestigungselement, wobei das Befestigungselement mit zwei jeweils eine Befestigungsöffnung aufweisenden Befestigungsenden ausgerüstet ist, wobei ein Befestigungsende zwischen den Noppen der Platte eingefügt ist, so dass die betreffende Befestigungsöffnung dieses Befestigungsendes über einer die Platte durchsetzenden Öffnung angeordnet ist. Es liegt im Rahmen der Erfindung, dass das zweite Befestigungsende zwischen den Noppen einer benachbarten Platte eingefügt ist und dass auch hier die Befestigungsöffnung dieses Befestigungsendes über einer die benachbarte Platte durchsetzenden Öffnung angeordnet ist. Durch die Befestigungsöffnung und die zugeordnete Öffnung in der Platte kann dann ein Fixierungselement, beispielsweise ein Nagel, ein Anker oder dergleichen in den Untergrund eingebracht werden und auf diese Weise werden die Platten funktionssicher an dem Untergrund befestigt sowie miteinander verbunden.

Der Erfindung liegt die Erkenntnis zugrunde, dass mit der erfindungsgemäßen Rohraufnahmeplatte eine sehr einfache und vor allem funktionssichere sowie präzise Verlegung möglich ist. Aufgrund der Transparenz der Platte kann problemlos der ideale Untergrund, beispielsweise eine Holzlattung, für eine Fixierung der Platte aufgefunden werden. Das ist vor allem bei der Verlegung der Platten im Deckenbereich oder Wandbereich relevant. Aufgrund der Transparenz der erfindungsgemäßen Rohraufnahmeplatte kann ohne weiteres erkannt werden, ob die unter der Platte vorgesehene Dämmschicht vollflächig bzw. vollständig verlegt ist. Entsprechende Fehler beim Verlegen treten nicht mehr auf. Von ganz besonderer Bedeutung sind im Rahmen der Erfindung die Öffnungen, die eine erfindungsgemäße Rohraufnahmeplatte durchsetzen. Wie oben bereits ausgeführt, kann eine nachträglich aufgebrachte Masse (Ausgleichsmasse bzw. Füllmasse oder Vergussmasse) durch die Öffnungen dringen, so dass ein effektiver Verbund zum Untergrund hergestellt wird. Aufgrund der Transparenz der erfindungsgemäßen Rohraufnahmeplatte kann problemlos erkannt werden, zu welchem Ausmaß der Hohlraum in den Noppen mit der Masse verfüllt ist. Es ist nämlich erstrebenswert, eine möglichst vollständige Ausfüllung der Noppen mit der Masse zu erreichen. Diese vollständige Ausfüllung verbessert die Tragfähigkeit des Systems und vor allem auch die Temperaturverteilung in dem gesamten Heiz- oder Kühlsystem.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf eine erfindungsgemäße Rohraufnahmeplatte,

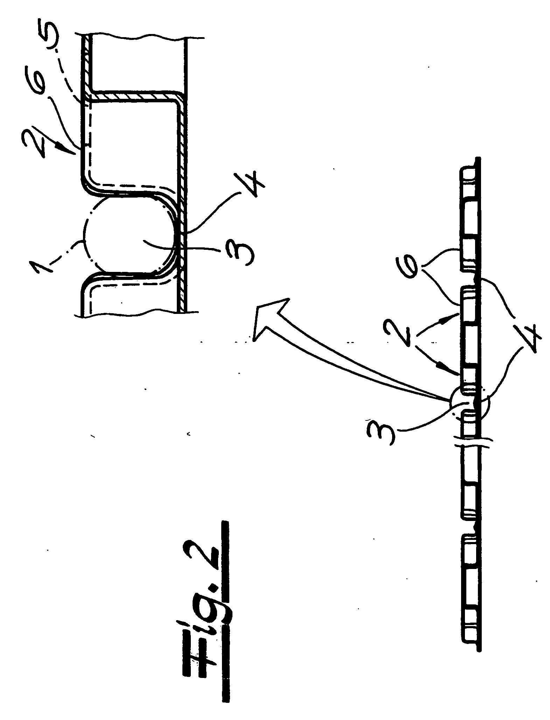

- Fig. 2: den Gegenstand gemäß Fig. 1 im Schnitt und
- Fig. 3: ein erfindungsgemäßes Befestigungselement.

Die Figuren zeigen eine erfindungsgemäße Rohraufnahmeplatte aus Kunststoff, die für die Aufnahme von fluiddurchströmten Rohren 1, insbesondere von Heizungsrohren vorgesehen ist. Die Platte weist angeformte Rohraufnahmeelemente auf, die zweckmäßigerweise und im Ausführungsbeispiel in Form von Noppen 2 ausgebildet sind. Diese Noppen 2 bzw. die zwischen den Noppen 2 angeordneten Kanäle 3 sind für eine klemmende Halterung der Rohre 1 eingerichtet. Die Platte weist nach einer Ausführungsform und im Ausführungsbeispiel fernerhin bodenseitig angeformte Schwellen 4 auf, die zwischen den Noppen 2 angeordnet sind und ein in die Noppenfläche eingelegtes Rohr 1 als Distanzelemente mit einem bodenseitigen Abstand zur Auflagefläche der Platte halten.

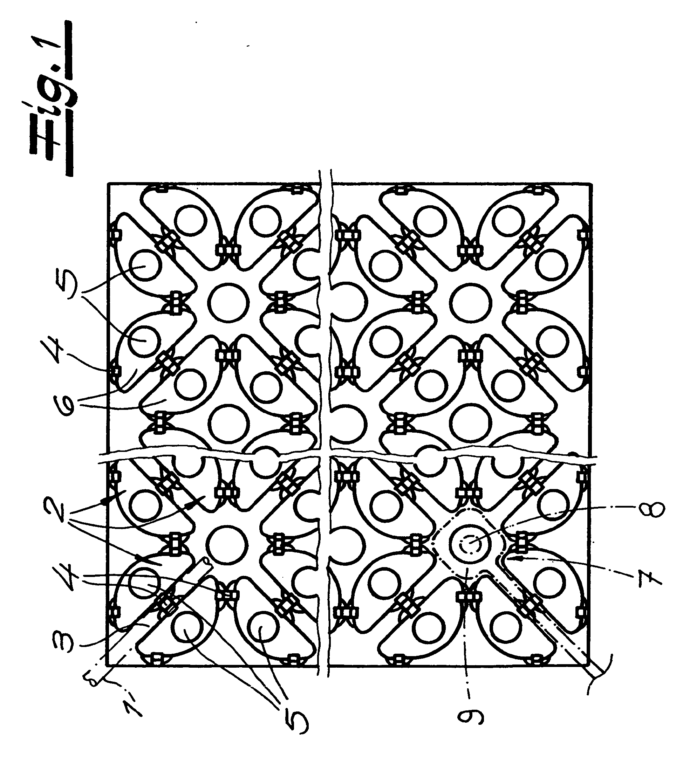

Die Noppen 2 sind innen hohl und somit gleichsam als Näpfe ausgebildet, die nach unten offen sind. Nach sehr bevorzugter Ausführungsform und im Ausführungsbeispiel sind die Platte durchsetzende Öffnungen 5 vorgesehen. Insbesondere in Fig. 1 ist erkennbar, dass zumindest ein Teil dieser Öffnungen 5 in den Noppenflächen, nämlich im Ausführungsbeispiel in den Noppenoberseiten 6 vorgesehen sind. Im Ausführungsbeispiel nach Fig. 1 sind die in den Noppenoberseiten 6 vorgesehenen Öffnungen 5 zentralmittig in diese Noppenoberseiten 6 angeordnet. Die hier dargestellte Platte eignet sich insbesondere für eine Verlegung der Rohre auf einem Boden/Fußboden oder an einer Decke. Die zentralmittige Anordnung der Öffnungen 5 gewährleistet, dass eine nicht dargestellte nachträglich aufgebrachte Masse, beispielsweise eine Estrichmasse, sich gleichmäßig in den Noppen 2 verteilt und die Noppen 2 möglichst vollständig ausfüllt.

Die erfindungsgemäße Platte ist transparent ausgeführt, so dass man durch die Platte den Hintergrund bzw. Untergrund mit bloßem Auge erkennen kann. Nach einer bevorzugten Ausführungsform der Erfindung besteht die Platte aus einem Polyester, bevorzugt aus Polyethylenterephthalat (PETP).

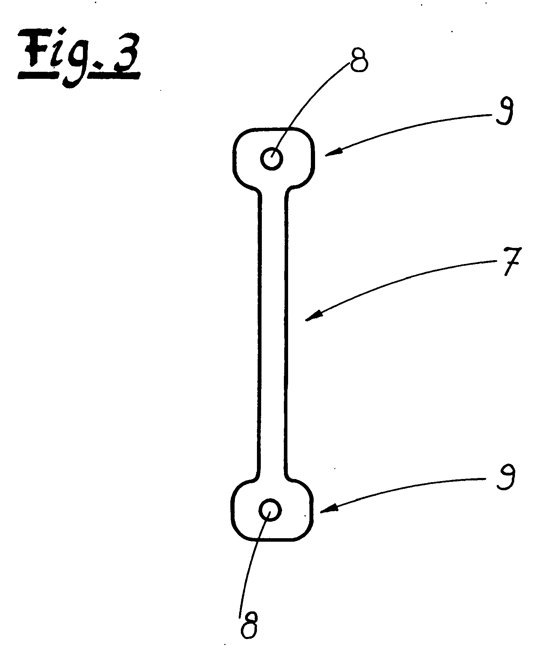

In der Fig. 1 ist im Übrigen erkennbar, dass ein Befestigungselement 7 mit einem eine Befestigungsöffnung 8 aufweisenden Befestigungsende 9 zwischen den Noppen 2 der Platte eingefügt ist, so dass die Befestigungsöffnung 8 dieses Befestigungsendes 9 über einer die Platte durchsetzenden Öffnung 5 angeordnet ist. Auf diese Weise kann ein Fixierungsmittel, wie beispielsweise ein Nagel oder ein Anker durch die Befestigungsöffnung 8 und die Öffnung 5 in den Untergrund eingeführt werden, ohne dass die Platte beschädigt wird. Indem das zweite Befestigungsende 9 des Befestigungselementes 7 in entsprechender Weise in eine benachbarte Platte eingefügt wird, können die beiden benachbarten Platten effektiv verbunden werden. - Fig. 3 zeigt im Übrigen ein erfindungsgemäßes Befestigungselement 7 mit zwei jeweils eine Befestigungsöffnung 8 aufweisenden Befestigungsenden 9. Das Befestigungselement 7 hat in Fig. 3 und vorzugsweise eine Knochenform.

## Patentansprüche

1. Rohraufnahmeplatte aus Kunststoff für eine Aufnahme von fluiddurchströmten Rohren (1), insbesondere von Heizungsrohren, wobei die Platte angeformte Rohraufnahmeelemente aufweist, **dadurch gekennzeichnet, dass** die Platte zumindest bereichsweise transparent ausgebildet ist.

2. Rohraufnahmeplatte nach Anspruch 1, **dadurch gekennzeichnet, dass** die Rohraufnahmeelemente für eine klemmende Halterung der Rohre (1) eingerichtet sind.

3. Rohraufnahmeplatte nach einem der Ansprüche 1 oder 2, **dadurch gekennzeichnet, dass** die Rohraufnahmeelemente als Noppen (2) ausgebildet sind, und dass zwischen den Noppen (2) Kanäle (3) für die Aufnahme der Rohre (1) vorgesehen sind.

4. Rohraufnahmeplatte nach einem der Ansprüche 1 bis 3, **dadurch gekennzeichnet, dass** eine Mehrzahl von die Platte durchsetzenden Öffnungen (5) vorgesehen ist.

5. Rohraufnahmeplatte nach einem der Ansprüche 1 bis 4, **dadurch gekennzeichnet, dass** zumindest ein Teil der Öffnungen (5) in den Noppenflächen, vorzugsweise in den Noppenoberseiten (6) vorgesehen ist.

6. Rohraufnahmeplatte nach Anspruch 5, **dadurch gekennzeichnet, dass** zumindest ein Teil der Öffnungen (5) zentralmittig in den Noppenoberseiten (6) angeordnet ist.

7. Rohraufnahmeplatte nach Anspruch 5, **dadurch gekennzeichnet, dass** zumindest ein Teil der Öffnungen (5) exzentrisch bezüglich der Oberseitenmitte in der Noppenoberseite (6) angeordnet ist.

8. Rohraufnahmeplatte nach einem der Ansprüche 1 bis 7, **dadurch gekennzeichnet, dass** die Platte aus einem Polyester besteht.

9. Rohraufnahmeplatte nach Anspruch 8, **dadurch gekennzeichnet, dass** die Platte aus Polyethylenterephthalat (PETP) besteht.

10. Aggregat aus einer Rohraufnahmeplatte nach einem der Ansprüche 4 bis 9 und einem Befestigungselement (7), **dadurch gekennzeichnet, dass** das Befestigungselement (7) mit zwei jeweils eine Befestigungsöffnung (8) aufweisenden Befestigungsenden (9) vorgesehen ist, wobei ein Befestigungsende (9) zwischen den Noppen (2) der Platte eingefügt ist, so dass die Befestigungsöffnung (8) dieses Befestigungsendes (9) über einer die Platte durchsetzenden Öffnung (5) angeordnet ist.

## Claims

1. Pipe holding plate made from plastic for holding pipes (1) through which a fluid flows, in particular heating pipes, wherein the plate has integrally formed pipe holding elements, **characterised in that** the plate is transparent at least in parts.

2. Pipe holding plate according to claim 1, **characterised in that** the pipe holding elements are designed to hold the pipes (1) with a clamping fit.

3. Pipe holding plate according to one of claims 1 or 2, **characterised in that** the pipe holding elements are designed as bumps (2), and **in that** channels (3) for receiving the pipes (1) are provided between the bumps (2).

4. Pipe holding plate according to one of claims 1 to 3, **characterised in that** a plurality of openings (5) which pass through the plate are provided.

5. Pipe holding plate according to one of claims 1 to 4, **characterised in that** at least some of the openings (5) are provided in the bump areas, preferably in the bump upper sides (6).

6. Pipe holding plate according to claim 5, **characterised in that** at least some of the openings (5) are arranged centrally in the bump upper sides (6).

7. Pipe holding plate according to claim 5, **characterised in that** at least some of the openings (5) are arranged eccentrically in the bump upper side (6) with respect to the centre of the upper side.

8. Pipe holding plate according to one of claims 1 to 7, **characterised in that** the plate is made from a polyester.

9. Pipe holding plate according to claim 8, **characterised in that** the plate is made from polyethylene terephthalate (PETP).

10. Assembly consisting of a pipe holding plate according to one of claims 4 to 9 and a fixing element (7), **characterised in that** the fixing element (7) is provided with two fixing ends (9) which each have a fixing opening (8), wherein one fixing end (9) is inserted between the bumps (2) of the plate so that the fixing opening (8) of this fixing end (9) is arranged above an opening (5) passing through the plate.

## Revendications

1. Plaque de montage de tubes, réalisée en matière plastique, pour le logement de tubes (1) de passage de fluides, en particulier de tubes de chauffage, la plaque comportant des éléments conformés pour le logement des tubes, **caractérisée en ce que** la plaque a une réalisation transparente au moins par zones.

2. Plaque de montage de tubes suivant la revendication 1, **caractérisée en ce que** les éléments de logement de tubes sont conçus pour une fixation par coinçage des tubes (1).

3. Plaque de montage de tubes suivant l'une des revendications 1 et 2, **caractérisée en ce que** les éléments de logement de tubes sont configurés sous forme de nopes (2), et que des canaux (3) pour le logement des tubes (3) sont prévus entre les nopes (2).

4. Plaque de montage de tubes suivant l'une des revendications 1 à 3, **caractérisée en ce qu'**il est prévu une pluralité d'ouvertures (5) traversant la plaque.

5. Plaque de montage de tubes suivant l'une des revendications 1 à 4, **caractérisée en ce qu'**au moins une partie des ouvertures (5) est prévue dans les surfaces des nopes, de préférence dans les côtés supérieurs (6) des nopes.

6. Plaque de montage de tubes suivant la revendication 5, **caractérisée en ce qu'**au moins une partie des ouvertures (5) est disposée de façon centrale dans les côtés supérieurs (6) des nopes.

7. Plaque de montage de tubes suivant la revendication 5, **caractérisée en ce qu'**au moins une partie des ouvertures (5) est disposée de façon excentrée par rapport au centre du côté supérieur (6) des nopes.

8. Plaque de montage de tubes suivant l'une des revendications 1 à 7, **caractérisée en ce que** la plaque se compose d'un polyester.

9. Plaque de montage de tubes suivant la revendication 8, **caractérisée en ce que** la plaque se compose de polyéthylènetéréphatalate (PETP).

10. Groupe constitué d'une plaque de montage de tubes suivant l'une des revendications 4 à 9 et d'un élément de fixation (7), **caractérisé en ce que** l'élément de fixation (7) est prévu avec deux extrémités de fixation (9) comportant chacune une ouverture de fixation (8), une extrémité de fixation (9) étant insérée entre les nopes (2) de la plaque, de sorte que l'ouverture de fixation (8) de cette extrémité de fixation (9) est disposée au-dessus d'une ouverture (5) traversant la plaque.
